# EUROPEAN PATENT SPECIFICATION

(11) **EP 0 637 010 B1**
(45) Date of publication and mention of the grant of the patent: **24.09.1997**
(21) Application number: 94305650.7
(22) Date of filing: 29.07.1994
(51) Int. Cl.: G09G 5/10

(54) **Display controller including black signal detector**
Anzeigesteueranordnung mit Schwarzsignaldetektor
Contrôleur d'affichage avec détecteur de signal de noir

(30) Priority: 30.07.1993 JP 189682/93
(43) Date of publication of application: 01.02.1995
(73) Proprietor: International Business Machines Corporation, Armonk, N.Y. 10504 (US)
(72) Inventor: Kobayashi, Masaki, Machida-shi, Tokyo-to (JP); Kataoka, Rieko, Yamato-shi, Kanagawa-ken (JP); Naitoh, Masahiro, Fujisawa-shi, Kanagawa-ken (JP)
(74) Representative: Richards, John Peter

(56) References cited:
- IBM TECHNICAL DISCLOSURE BULLETIN, vol.27, no.7B, December 1984, NEW YORK US pages 4346 - 4348 KOBAYASHI AND NAITO 'Brightness and contrast control for crt monitor'

## Description

The present invention relates to a display device controller, for example for display devices for personal computers, such as CRT display devices and liquid crystal display devices.

The colour display on a computer display device is based upon on an additive mixture process of three primary colours red, blue and green (referred to as RGB). By individually adjusting the luminous intensity of each of the three colour components RGB, in principle it is possible to display all colours falling within a triangle formed by connecting the three points of the RGB primary colours in a chromaticity diagram. Therefore, displaying a black image on the display device can be accomplished by properly adjusting the luminous intensity of each of the three RGB components for each picture element of the screen which is to be black.

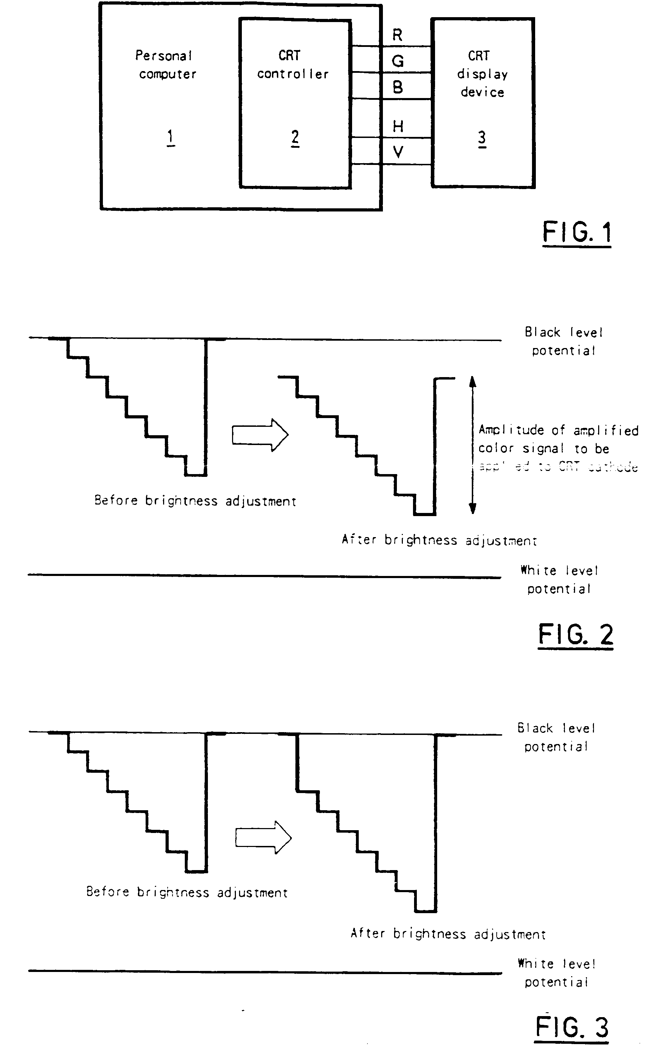

The interface between a personal computer display device and its controller is typically configured as shown in Fig. 1, where a display device controller 2 to which video data to be displayed is input, and which is provided within a personal computer 1, is connected to a display device 3 such as a CRT display device or liquid crystal display by five signal lines: three RGB signal lines, one for red (R), one for green (G) and one for blue (B), and vertical (V) and horizontal (H) synchronous (sync) signal lines.

Generally, for analog RGB processes, three RGB analog signals having an amplitude of from 0V to 0.7V are transferred from the controller to the display device via the RGB colour signal lines. For each of the RGB analog signals, 0V corresponds to black and 0.7V corresponds to white, and the colour intensity of each primary RGB colour is individually adjusted in the range from 0V to 0.7V according to the particular colour to be displayed. In a CRT display device, for example, each analog RGB signal thus supplied to the CRT is amplified proportionately to provide a signal having a voltage ranging from a black level potential to a white level potential and applied to the CRT cathode.

CRT and other display devices generally have a manual control for adjusting brightness, allowing the user to change the brightness of the display screen. To make brighter the screen of a CRT display, for example, by moving the manual control, the entire colour signal being amplified within the display device is shifted from the black level potential towards the white level potential and the voltage applied to the CRT cathode is increased; thus the whole screen is made brighter. In this case, however, a signal which should be at the black level potential for displaying a black image on the screen also shifts toward the white level potential. Consequently, the three RGB picture elements for the portion of the display screen where black is desired to be displayed are somewhat illuminated, and thus the portion which is desired to remain black also becomes lighter.

This is often undesirable. In multimedia display devices, for example, clearer colour pictures are desired, and in particular black plays a very important role in more clearly displaying chromatic colours on the screen. Therefore, it is necessary for displaying clearer colour images to have black manifest itself properly, i.e. to ensure that black images are displayed in an area where they must be displayed on the display device.

The IBM TECHNICAL DISCLOSURE BULLETIN, vol. 27, no. 7b, 12/1984, New York, US, pages 4346-4348 discloses a brightness and contrast control technique, wherein the black level is clamped to secure a fixed black level regardless of the variation of contrast and brightness. If all input video bits are off (= "black" signal), a predetermined black level voltage is directly supplied via a non-inverting video amplifier to the CRT cathode. However, this controller is not fully compatible with conventional display devices.

Accordingly, the present invention provides a display device controller having RGB colour signal lines and horizontal and vertical sync signal lines, characterised by means for detecting in respect of at least one of the RGB colour signal lines when the signal on that line corresponds to a black level, and means for adding to at least one of the horizontal and vertical sync signal lines a signal corresponding to the black level signal so detected.

The invention further provides the combination of a display device and a controller as defined above, the display device having means for extracting the or each black level signal from said sync signal and means for maintaining the black level potential of the display device at a predetermined value in response to each said black level signal so extracted.

An embodiment of the invention will now be described, by way of example, with reference to the accompanying drawings, wherein:
Fig. 1 shows an interface between a display device controller for personal computers and a CRT display device,
Fig. 2 shows the variation of the black level potential before and after brightness adjustment for amplified colour signals within a conventional CRT display device,
Fig. 3 shows that the black level potential for colour signals amplified within the CRT display device according to the embodiment of the present invention remains unchanged before and after brightness adjustment,
Fig. 4 shows an embodiment of a CRT display device controller according to the present invention,
Fig. 5 is a schematic diagram of a vertical sync signal to which the black level signal is added according to the embodiment of the present invention,
Fig. 6 shows a means for extracting the black level signal from the vertical sync signal at the CRT display device,
Fig. 7 shows how the black level signal extracted from the vertical sync signal at the CRT display device can be used for black level control, and
Fig. 8 is a conversion table for use in explaining the operation of the embodiment of the invention.

Although the following description of an embodiment of the invention is in relation to a CRT display device, the present invention is also applicable to other display devices such as liquid crystal display devices.

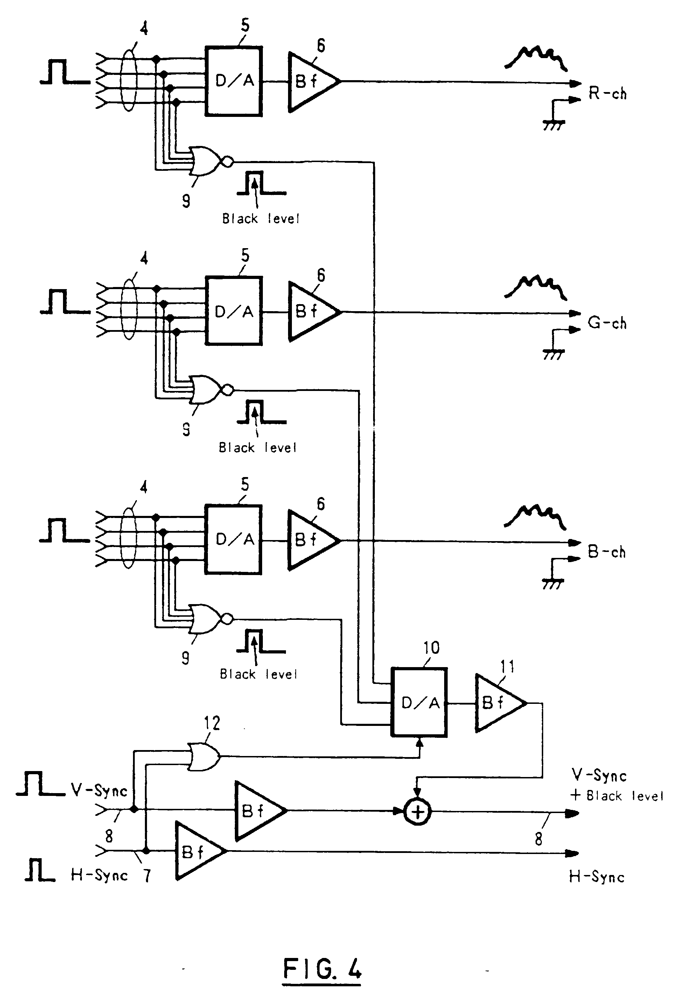

Fig. 4 shows the output stages of a personal computer display device controller respectively providing three RGB colour signals R, G and B and horizontal and vertical sync signals H-sinc and V-sync. The RGB primary colours are provided as four bit digital signals from the computer CPU.

Each digital colour signal is converted by a respective four bit digital/analog converter 5 into a single analog signal having a voltage in the range 0V to 0.7V, and output from the controller via a respective buffer 6. The output analog colour signal is sent to the CRT display device via a single interface cable. The horizontal and vertical sync digital signals are output through horizontal sync signal line 7 and vertical sync signal line 8 respectively and also sent to the CRT display device via the interface cable. Thus far, the description above is the same as for the configuration of conventional controllers for CRT display devices.

In accordance with the embodiment of the invention, for each RGB signal the four signal lines 4 which are input to the D/A converter 5 are also input to a NAND gate 9, and the output lines of the NAND gates 9 are connected to the inputs of a D/A converter 10 for conversion to an analog signal. The output of the D/A converter 10 is connected to vertical sync signal line 8 via a buffer 11. The output line of D/A converter 10 may be connected to horizontal sync signal line 7 instead of the vertical sync signal line. Also, the horizontal and vertical sync signals are connected to respective inputs of an OR gate 12 whose output is connected to the D/A converter 10.

For a black image display by the CRT display device, RGB digital colour signals of a predetermined bit pattern corresponding to the black level are sent to the controller by the CPU; for example, all four bits of the four-bit digital colour signals 4 may be "0" or "1". The present embodiment extracts an output referred to as a "black level signal" which corresponds to that predetermined bit pattern for black image display. Thus, when all four bits are "0"s the NAND gate 9 outputs "1" defined as the "black level signal". If, however, the black level corresponds to all four bits of the digital colour signal 4 being "1", one would use an AND gate instead of the NAND gate 9 to produce a similar "black level signal". The black level signals "1" from the three NAND gates 9 output are input to the D/A converter 10 as a three-bit digital signal.

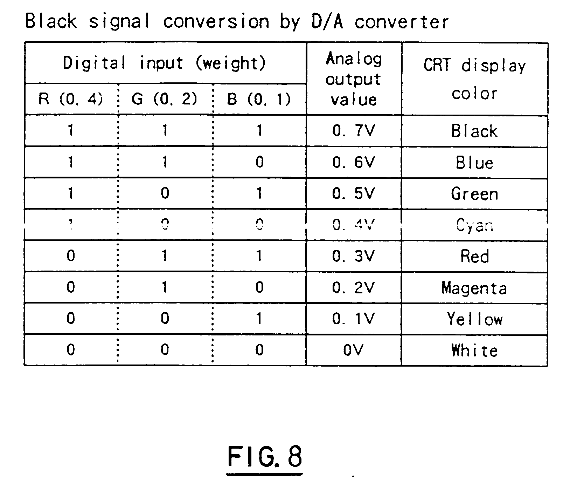

The three-bit D/A converter 10 converts the three digital black level signals into a single analog signal based upon, for example, the conversion table shown in Fig. 8. In this case, the black level signal from each RGB channel is given a predetermined weight before being converted into an analog signal. Specifically, in Fig. 8, black level signals from the R, G and B channels are weighted 0.4, 0.2, and 0.1 respectively. This weighting is made so that the CRT display device, described below, is able to determine which one or more of the RGB channels is providing the black level signal when the CRT display device decouples the black level signal from the vertical sync signal line.

The analog signal to be output on to the vertical sync line 8 is set at a signal level which is lower than the discrimination threshold of the vertical sync signal at the CRT display device. For example, in Fig. 8, conversion is made so that the level is less than 0.7V which is a "0" level threshold for the TTL used for detecting vertical sync signals at the display device. This prevents the black level signal which is added to the vertical sync signal from being inadvertently detected as a vertical sync signal, i.e. as a "1" signal, by the vertical sync signal detector at the display device. In Fig. 8, to display an image with all colours in black, that is a black image, three RGB digital signals of "1"s are output as an analog signal of 1∗0.4+1∗0.2+1∗0.1 = 0.7V after weighing.

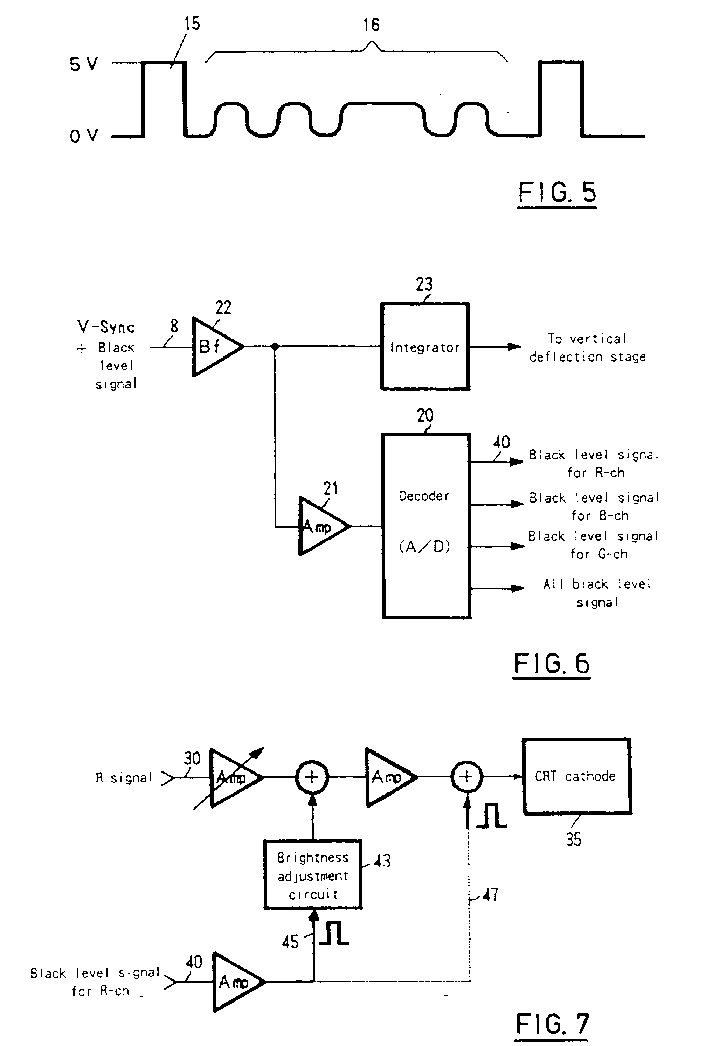

The black level signal is input to the vertical sync signal line 8 via a buffer 11. Fig. 5 shows the black level signal 16 in an exaggerated manner to help understand how the black level signal 16 is added.

Thus, by having the amplitude of the black level signal added to the vertical sync signal below the vertical sync detection threshold, even when the controller is connected to a conventional CRT display device the black level signals added to the vertical sync signal are not detected as vertical sync signals. Therefore, the controller of the present invention may be connected to conventional display devices, thus providing compatibility with conventional display devices.

The output of the OR gate 12 turns "1" when either one or both of the horizontal and vertical sync signals are "1", and is used to force the output of D/A converter 10 into "0". This is because the CRT will display "black" during horizontal or vertical synchronization, and "black" can be discriminated based upon a horizontal or vertical sync signal pulse at the display device, thus eliminating the need for intentionally adding the black display signal to the vertical sync signal lines. During vertical synchronization, if for example a black level signal of 0.7V is added, the sync signal detector would inadvertently recognize that the ground level of the vertical sync signal has risen to 0.7V. This could cause trouble in that the vertical sync signal would not be precisely recognized. To prevent this, the output of D/A converter 10 is forced into "0" during synchronization.

Fig. 6 shows a circuit at the CRT display device for receiving the vertical sync signal to which the black level signal of RGB channels is added. The vertical sync signal line 8 is connected to an integrator 23 via a buffer 22, and also to a decoder 20 via an amplifier 21.

The integrator 23 separates the vertical sync signal from the vertical sync signal line 8, and sends it to the vertical deflection stage of the CRT. The decoder 20, on the other hand, separates the black level signal(s) from the line 8. The signal thus separated and output from the decoder 20 includes not only an "all black level signal" where all three RGB channels have a black level, but also individual black level signals for the respective RGB channels which are determined based on the table shown in figure 8. Thus, if for example the magnitude of the black level signal added to the vertical sync signal is 0.3V, the decoder, based on Fig. 8, outputs a black level signal of "1" for each of the G and B channels and a black level signal of "0" for the R channel.

The use of the black level signal output from the decoder will now be described with reference to Fig. 7. Fig. 7 shows the case for the R channel black level signal, but the equivalent applies for the G and B channels also.

The R channel black level signal 40 from the decoder 20 is input to a brightness control circuit 43 after being amplified. The signal is used, even when the manual control for brightness adjustment is turned up, to maintain a black level potential of the colour signal being amplified and applied to the CRT cathode, as shown in Fig. 3. Thus, the potential of the portion of the signal which should display a black image can be kept at the black level potential. A similar effect can be achieved by adding the amplified black level signal directly to the R signal line which is applied to the CRT cathode.

The embodiment described above is so configured that the weighted black level signals from each RGB channel are added to the vertical sync signal line. However, a more simplified method may be employed that uses a three input AND gate in place of three bit D/A converter 10 in order to add only an "all black level signal" or all channels of RGB being "black" to vertical sync signal line 8.

Thus, in the computer display, the display device controller provides a new "black level signal" to the display device. Using this black level signal allows for displaying clearer colour images. In brightness adjustment, for instance, it is possible to prevent those picture element which must display a black image from being illuminated no matter how the brightness adjustment control is manipulated. This prevents the whole screen from becoming whitish, and ensures that the portion which is desired to remain in black is maintained in black itself, thus allowing chromatic colours such as red and blue to be displayed more clearly.

## Claims

1. A display device controller (2) having RGB colour signal lines, horizontal and vertical sync signal lines (7,8) and means (9) for detecting in respect of at least one of the RGB colour signal lines when the signal on that line corresponds to a black level and for accordingly generating a black level signal, the controller further comprising means (10,11) for adding to at least one of the horizontal and vertical sync signal lines (7,8) a signal corresponding to the black level signal.

2. A controller (2) according to claim 1, wherein the detecting means (9) is provided for each of said RGB colour signal lines so that in operation a signal corresponding to the black level signal for each of the RGB signal lines is added to the sync signal line.

3. A controller (2) according to claim 2, wherein means are provided for weighting the signals added to the sync signal line according to the RGB line from which they are derived.

4. A controller (2) according to claim 3, being arranged so that the weighted signals have in operation a level less than the detection threshold for the sync signal.

5. The combination of a display device and a controller (2) as claimed in any preceding claim, the display device having means (20) for extracting the or each black level signal from said sync signal and means for maintaining the black level potential of the display device at a predetermined value in response to each said black level signal so extracted.

## Patentansprüche

1. Anzeigesteuereinrichtung (2) mit RGB-Farbsignalleitungen, horizontalen und vertikalen sync-Signalleitungen (7, 8) und Mitteln (9) um in bezug auf wenigstens eine der RGB-Farbsignalleitungen zu erkennen, wenn das Signal an dieser Leitung einem Schwarzwert entspricht und für die entsprechende Erzeugung eines Schwarzwertsignales, wobei die Steuereinheit weiterhin Mittel (10, 11) umfaßt, um wenigstens einer der horizontalen und vertikalen sync-Signalleitungen (7, 8) ein Signal zuzuordnen, das dem Schwarzwertsignal entspricht.

2. Steuereinheit (2) gemäß Anspruch 1, bei der das Erkennungsmittel (9) für jede der RGB-Farbsignalleitungen bereitgestellt wird, so daß beim Betrieb ein Signal, das dem Schwarzwertsignal für jede der RGB-Signalleitungen entspricht, der sync-Signalleitung hinzugefügt wird.

3. Steuereinheit (2) gemäß Anspruch 2, wobei Mittel bereitgestellt werden, um die Signale zu wichten, die der sync-Signalleitung gemäß der RGB-Leitung, von der sie gewonnen wurden, hinzugefügt werden.

4. Steuereinheit (2) gemäß Anspruch 3, die so angeordnet wurde, daß die gewichteten Signale im Betrieb einen Wert haben, der geringer als der Erkennungsschwellenwert für das sync-Signal ist.

5. Kombination aus einer Anzeigeanordnung und einer Steuereinheit (2), wie sie in jedem der vorherigen Ansprüche beansprucht wird, wobei die Anzeigeanordnung Mittel (20) besitzt, um das oder jedes Schwarzwertsignal aus dem sync-Signal herauszuholen und Mittel für die Aufrechterhaltung des Schwarzpegelpotentials der Anzeigeanordnung auf einem vorher festgelegten Wert als Antwort auf jeden der so herausgeholten Schwarzwertsignale besitzt.

## Revendications

1. Dispositif (2) de commande de dispositif d'affichage comportant des lignes de signal de couleur RGB, des lignes (7, 8) de signal de synchronisation horizontale et verticale, et un moyen (9) pour détecter, par rapport au moins à l'une des lignes de signal de couleur RGB le moment où le signal sur cette ligne correspond à un niveau du noir et pour, en conséquence, générer un signal de niveau du noir, le dispositif de commande comprenant en outre un moyen (10, 11) pour ajouter au moins à l'une des lignes (7, 8) de signal de synchronisation horizontale et verticale un signal correspondant au signal de niveau du noir.

2. Dispositif (2) de commande selon la revendication 1, dans lequel le moyen de détection (9) est utilisé pour chacune des lignes de signal de couleur RGB de telle sorte que lors du fonctionnement, un signal correspondant au signal de niveau du noir pour chacune des lignes de signal RGB soit ajouté à la ligne de signal de synchronisation.

3. Dispositif (2) de commande selon la revendication 2, dans lequel des moyens sont utilisés pour pondérer les signaux ajoutés à la ligne de signal de synchronisation en fonction de la ligne RGB à partir de laquelle ils sont dérivés.

4. Dispositif (2) de commande selon la revendication 3, agencé de telle sorte que les signaux pondérés ont, lors du fonctionnement, un niveau inférieur au seuil de détection du signal de synchronisation.

5. Combinaison d'un dispositif d'affichage et d'un dispositif (2) de commande selon l'une quelconque des revendications précédentes, le dispositif d'affichage comportant un moyen (27) pour extraire le ou chaque signal de niveau du noir à partir dudit signal de synchronisation et un moyen pour maintenir le potentiel du niveau du noir du dispositif d'affichage à une valeur prédéterminée en réponse à chacun desdits signaux de niveau du noir ainsi extraits.
